# FASCICULE DE BREVET EUROPEEN

(11) **EP 0 371 856 B1**
(45) Date de publication et mention de la délivrance du brevet: **08.09.1993**
(21) Numéro de dépôt: 89403247.3
(22) Date de dépôt: 23.11.1989
(51) Int. Cl.: A23L 1/32, A23L 1/05, A23J 1/08

(54) **Ovoproduit liquide**
Flüssiges Eiprodukt
Liquid egg-product

(30) Priorité: 28.11.1988 FR 8815506
(43) Date de publication de la demande: 06.06.1990
(73) Titulaire: EUROPE PROTEINES INDUSTRIES BRETAGNE Société Anonyme, F-22360 Langueux (FR)
(72) Inventeur: Corlay, Yvon, F-29230 Landivisiau (FR); Causeret, Denis, F-21000 Dijon (FR); Hutet, Thierry, F-22400 Lamballe (FR)
(74) Mandataire: Bourgognon, Jean-Marie

(56) Documents cités:
- EP-A- 0 103 427
- EP-A- 0 149 517
- DE-A- 2 344 057
- PATENT ABSTRACTS OF JAPAN vol.8, no.212 ( C-244 )(1649), 27 septembre 1984;
- PATENT ABSTRACTS OF JAPAN vol.7, no.139 (C-171)(1284), 17 juin 1983;

## Description

La présente invention concerne les ovoproduits liquides à base d'oeufs entiers, notamment d'oeufs de poules, exempts de liants gélatineux et amylacés.

Au brevet français No 2.367.435, on décrit, après rappel de l'art antérieur mettant en oeuvre une évaporation sous vide ou un traitement aux rayons ultraviolets, un procédé de traitement de produits d'oeufs liquides destiné à les stériliser sans trop les dénaturer. Ce procédé consiste à leur ajouter du sel ou du sucre en une quantité d'au moins 5 % ou 30 % jusqu'à l'obtention d'un poids osmotique d'au moins 20 atmosphères, à éliminer les gaz dissous jusqu'à l'obtention d'une teneur en oxygène inférieure à 3 ppm, notamment par chauffage, de préférence entre 50 et 65°C, sous un vide poussé, avec barbotage d'un gaz inerte. On obtient ainsi un ovoproduit liquide stérile et se conservant d'autant mieux qu'on lui fait subir éventuellement un traitement thermique de plusieurs jours entre 40 et 65°C.

Ce procédé est compliqué par son stade d'élimination des gaz dissous sous vide et sous atmosphère protectrice. Ce procédé ne permet pas d'obtenir un ovoproduit liquide qui ne soit ni salé, ni sucré.

On peut pallier ces inconvénients par un procédé de préparation d'ovoproduits liquides non dénaturés qui, tout en leur donnant une durée de conservation au froid (4°C) de plusieurs semaines, suffisante pour leur commercialisation, est bien plus simple et est soumis à moins de contraintes que les procédés antérieurs.

Le procédé consiste à porter de l'oeuf entier liquide entre 50 et 56°C et, de préférence, à 52°C environ, pendant 18 à 72 heures et, de préférence, pendant 48 heures, et sans addition de trypsine, puis à le refroidir et à le stocker à une température inférieure à 4°C environ.

Ce traitement thermique dans une plage de température étroitement délimitée, et notamment à 52°C environ, ne dénature pratiquement pas le produit et n'en provoque pas la coagulation même pendant la durée longue indiquée, comme on pouvait le craindre, puisque, comme le rappelle le brevet No 2.367.435, une simple pasteurisation pendant quelques minutes à la pression atmosphérique entraîne une dénaturation importante des constituants de l'oeuf lorsque la température de traitement atteint environ 54°C pour le blanc d'oeuf. Ce traitement thermique a un effet de destruction de microorganismes qui permet de conserver le produit obtenu au froid pendant plusieurs semaines.

Pour garantir encore mieux la destruction de microorganismes, le procédé consiste à porter l'oeuf entier liquide entre 50 et 56°C pendant 18 à 72 heures, alors qu'il est déjà dans un récipient étanche aux microorganismes.

Il est souhaitable de porter l'oeuf entier liquide à la température indiquée pour le traitement thermique d'une manière homogène, et c'est pourquoi on préfère ne mettre l'oeuf entier liquide dans le récipient étanche aux microorganismes qu'après l'avoir portée 2 minutes environ à une température de 50 à 55°C.

Mais, lorsque l'on effectue ce traitement thermique sur l'oeuf entier, on constate qu'à la fin de ce traitement et au refroidissement il se produit une ségrégation des phases qui nécessite, lors de l'utilisation ultérieure, d'agiter le produit. Pour ne pas avoir à effectuer cette opération, et pour que le produit apparaisse à l'utilisateur sous une forme parfaitement liquide, on propose, suivant l'invention, un ovoproduit conforme à la revendication 1. On obtient ainsi un produit vraiment liquide, qui peut être conservé et qui ressemble autant qu'il est possible à l'oeuf entier. Les agents dits épaississants sont notamment des alginates, des gommes telles que de la gomme de xanthane, ou un extrait de graines de guar ou de caroube. Ces agents sont connus en soi comme agents épaississants ou gélifiants. Or, d'une manière inattendue, ajoutés à de l'oeuf entier liquide, ils ont un rôle de mise en suspension des parties solides susceptibles de se séparer lors du traitement de conservation exposé ci-dessus. Ces agents, notamment les alginates, sont des substances hygroscopiques. Pour éviter leur hydratation prématurée avec formation de grumaux, on préfère les ajouter sous la forme d'une suspension dans une huile comestible, éventuellement d'origine animale, mais de préférence d'origine végétale telle que de l'huile de tournesol, de l'huile de coprah, de l'huile d'arachide, choisie pour son aptitude à ne pas se figer aux températures auxquelles le produit d'oeuf sera traité et stocké. On peut également mettre l'agent dit épaississant en solution dans de l'eau. Quand on utilise de l'huile comestible notamment végétal, on en utilise de 0,5 à 3 grammes et de préférence au moins 2 grammes par gramme d'agent épaississant, tandis qu'on utilise, de préférence, au moins 5 grammes d'eau pour 1 gramme de l'agent épaississant. Comme la teneur pondérale en eau de l'oeuf entier est comprise entre 75 et 78,5 %, l'ovoproduit suivant l'invention a une teneur en eau comprise entre 76 et 83,5 % qui, dans certains cas, dépasse donc 78,5 %.

De préférence, l'ovoproduit suivant l'invention est contenu dans un récipient étanche aux microorganismes.

A la demande de brevet européen 103 427, on revendique un ovoproduit comprenant de l'oeuf, un carbohydrate de fixation de l'eau donnant de la stabilité à la congélation/décongélation et une pâte à frire.

L'addition d'hydrates de carbone, à savoir de l'amidon et des colloïdes, et de gélatine à de l'oeuf permet d'obtenir un produit que l'on peut cuire, congeler et décongeler sans synérèse. Le liant, c'est-à-dire de la gélatine ou de l'amidon prégélatinisé représente de 2 à 3 fois la quantité de l'oeuf. Cet ovoproduit se distingue de celui de l'invention par la présence d'une quantité importante de liant amylacé et gélatineux, par le fait que l'agent dit épaississant est ajouté en des quantités qui, bien que se chevauchant en partie, sont nettement supérieures à celles prévues par l'invention et par le fait que les fonctions de l'agent dit épaississant ne sont pas les mêmes. Dans l'art antérieur, il s'agit d'empêcher une synérèse. Suivant l'invention, il s'agit d'empêcher une séparation des phases d'un produit liquide.

Enfin, l'ovoproduit suivant l'invention est liquide, alors que celui de l'art antérieur est solide, ayant subi une cuisson préalable.

Même le mélange d'oeuf de départ, indiqué à l'exemple et qui n'est qu'un mélange destiné à être transformé rapidement par addition de liant, contient plus de 2 % d'amidon et ne répond pas à la définition de l'ovoproduit liquide suivant l'invention.

A la demande de brevet européen 149 517, on décrit des compositions d'oeuf contenant du fromage. On rappelle que c'est le jaune d'oeuf qui contient du cholestérol et on définit un ovoproduit liquide modifié à la page 2 ligne 28 qui a des niveaux moindres de cholestérol et de matières grasses saturées et qui est préparé en enlevant au moins une partie et de préférence tout le jaune, ce dernier étant remplacé par des additifs donnant au blanc d'oeuf des propriétés organoleptiques et une couleur analogue à l'oeuf entier.

Ce document décrit ensuite une composition d'oeuf et de fromage, ainsi que leur procédé de préparation. Au cours de la description des modes de réalisation préférés et notamment au dernier alinéa de la page 7, on décrit un ovoproduit liquide modifié, donc ne contenant pas de jaune, suivant la définition même donnée par ce document antérieur, qui comprend de 70 à 99,5 % en poids de blanc d'oeuf, de 0 à 1,0 % en poids de gomme, de 0 à 8 % de produit solide lacté sec non gras, de 0 à 15 % d'huile, de 0 à 1,0 % d'émulsionnant et de 0 à 3 % de colorant, de vitamines et d'agents aromatisants. Cet ovoproduit n'est pas à base d'oeuf entier. Le jaune en est expressément exclu.

Les gommes sont utilisées pour augmenter la viscosité, maintenir en suspension les ingrédients et stabiliser une émulsion qui a été formée par une addition d'huile.

En revanche, suivant l'invention, les agents dits épaississants empêchent la séparation du blanc d'oeuf et du jaune d'oeuf pendant le stockage de l'oeuf entier.

A la demande de brevet allemand 2 344 057, du blanc d'oeuf dépourvu du jaune riche en cholestérol est additionné de gomme de xanthane pour donner au produit liquide de la stabilité à la congélation/décongélation. La gomme est utilisée aussi pour augmenter la viscosité et maintenir l'émulsion. On utilise également de l'huile comme ingrédient pour remplacer la matière du jaune.

Il ne s'agit donc pas d'ovoproduit à base d'oeuf entier et la fonction de l'agent dit épaississant est différente de celle qu'il a dans l'ovoproduit suivant l'invention.

Les exemples suivants illustrent l'invention.

### EXEMPLE 1

On plonge 25 oeufs de poule dans un bain d'eau chlorée à 0,4°Cl pendant 1 minute. On casse les oeufs manuellement et on recueille 1400 grammes d'oeuf liquide dans un saladier propre. On bat les oeufs en une omelette à l'aide d'un batteur ménager de marque Moulinex, type 686. On pèse à la balance analytique 7 grammes d'alginate de sodium, type Satialgine S60 que l'on met dans un flacon. On y verse 14 grammes d'huile de tournesol. On bouche le flacon et on l'agite vigoureusement pour bien disperser l'alginate dans l'huile. Avec le batteur, on crée un cône d'agitation dans l'omelette. On verse progressivement le mélange d'alginate et d'huile dans le cône. On continue à mélanger pendant 1 à 2 minutes. On pompe l'omelette à un débit de 0,5 litre/minute au moyen d'une petite pompe à piston. On fait passer l'omelette dans un serpentin de verre de 300 cm de longueur immergé dans un bain-marie à 70°C. La température de l'omelette passe ainsi de 20° à 54°C. On refoule directement l'omelette dans un flacon d'une capacité de 1 litre en poly-propylène. Immédiatement après la fin du remplissage du flacon, on le stocke dans une étuve à 52°C. La température de l'étuve est réglée à ± 1°. 36 heures après, on refroidit le flacon en chambre froide à une température de +2°C.

Le produit obtenu est liquide, sans séparation d'une phase solide. Il a une bonne qualité bactériologique et une bonne qualité organoleptique.

### EXEMPLE 2

On reprend l'exemple 1, si ce n'est que l'on introduit la suspension d'alginate de sodium dans l'huile après que la température de l'omelette a été portée à 54°C. On obtient des résultats analogues.

### EXEMPLE 3

On reprend l'exemple 1, si ce n'est que l'on ajoute aux oeufs battus en une omelette du sel, du sucre et des condiments. On obtient des résultats analogues à ceux de l'exemple 1.

### EXEMPLE 4

On reprend l'exemple 1, mais en ne traitant que du jaune d'oeuf et en n'introduisant pas d'alginate de sodium. On obtient un produit d'aspect liquide ayant une bonne qualité bactériologique et une bonne qualité organoleptique.

### EXEMPLE 5

On reprend l'exemple 1, si ce n'est que l'on contamine l'omelette par des bactéries, avant de la porter à 52°C pendant 24 heures, au lieu de 36 heures. On obtient les résultats indiqués au tableau I, ci-dessous.

**TABLEAU I**

| Omelette contaminée en | Population initiale (germes/g de produit) | population après 24 h à 52°C (germes/g de produit) |
|---|---|---|
| Salmonella Saint-Paul | 33 150 000 | 0 |
| Salmonella Bredeney | 22 450 000 | 0 |
| Staphylocoque aureus | 590 000 | 0 |
| Staphylocoque saprophyticus | 5 300 000 | 0 |
| Escherichia coli | 35 000 | 0 |

Ce tableau montre l'efficacité du traitement thermique pour la qualité bactériologique du produit.

### EXEMPLE 6

On détermine la qualité bactériologique de l'ovoproduit liquide préparé à l'exemple 1, à des instants échelonnés dans le temps, pendant 33 jours. On obtient les résultats consignés au tableau II ci-dessous.

**TABLEAU II**

| Durée conservation +4°C (jour) | J | J+5 | J+12 | J+19 | J+26 | J+33 |
|---|---|---|---|---|---|---|
| Coliformes totaux | 0 | 0 | 0 | 0 | 0 | 0 |
| Coliformes fécaux | 0 | 0 | 0 | 0 | 0 | 0 |
| Streptocoques fécaux | Abs | Abs | Abs | Abs | Abs | Abs |
| Levures | 0 | 0 | 0 | 0 | 0 | 0 |
| Moisissures | 0 | 0 | 0 | 0 | 0 | 0 |
| Flore mésophile | 10 | 10 | 300 | 1200 | 2300 | 3500 |

Le produit n'a pas de défauts organoleptiques. Le pH ne varie pas au cours du stockage et reste égal à 7,6.

Un échantillon stocké trois mois et demi à +4°C a une flore mésophile de 38 000 germes par gramme.

### EXEMPLE 7

Pour mieux évaluer le rôle de la température du traitement thermique, on effectue des essais conformes à l'exemple 1, mais à des températures de 48°C, de 52°C (exemple 1), et de 55°C, après avoir contaminé les omelettes. La population initiale correspond à celle qui est présente à l'instant où les échantillons atteignent la température de consigne (flacons plongés dans un bain-marie et mis dans les cuves dès que la température de traitement chimique est atteinte).

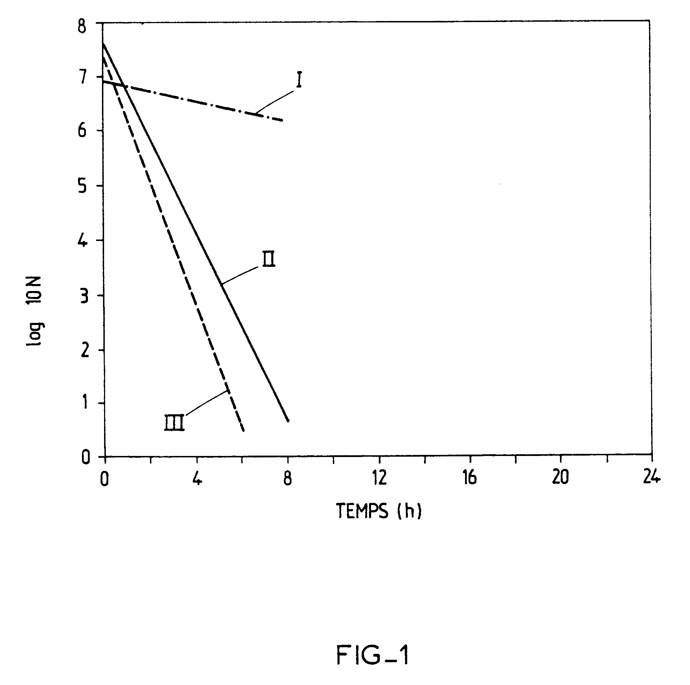

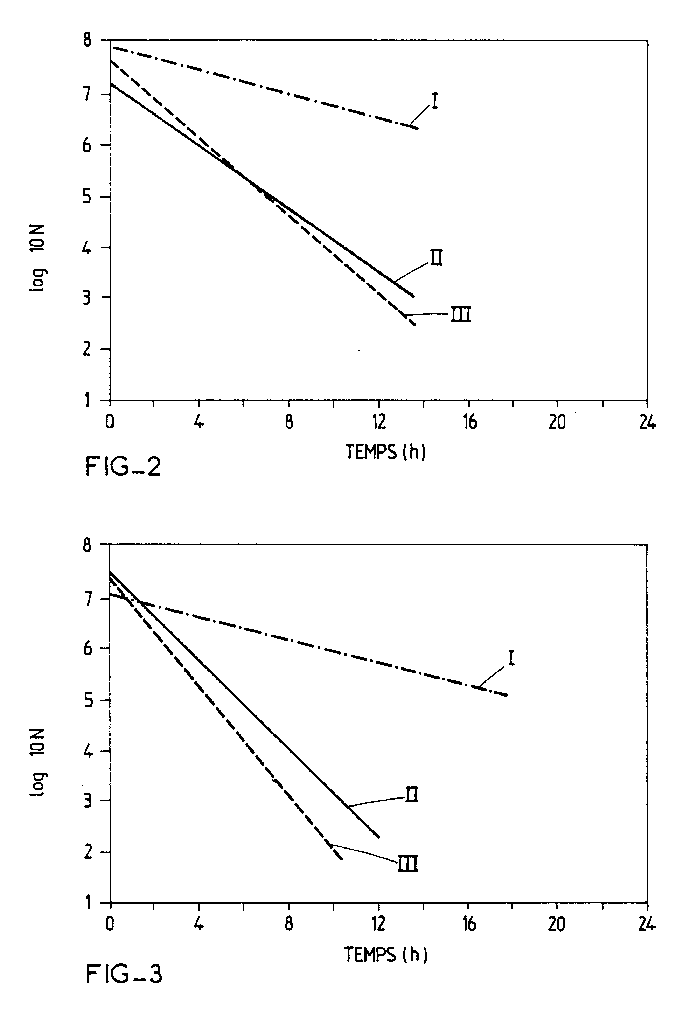

L'effet du traitement thermique a été testé sur une souche d'Escherichia coli et sur une couche de Salmonella Bredeney. Les essais concernant la flore totale mésophile ont porté sur de la coule crue laissée à la température ambiante pendant 24 heures. Aux figures 1, 2 et 3, on a porté en ordonnées le logarithme décimal de la population d'Escherichia coli, de Salmonella Bredeney et de la flore mésophile, respectivement, en fonction du temps. Les courbes I, II et III correspondent à des températures de traitement thermique de 48°Cn 52°C et 55°C, respectivement.

Ces courbes montrent la très nette différence entre le traitement à 48°C, qui est trop modéré pour assurer une bonne qualité bactériologique du produit, et les traitements à 52°C et 55°C, qui assurent cette qualité bactériologique recherchée.

L'ovoproduit préparé par le procédé de l'invention peut être utilisé pour la préparation d'omelettes ou en tant qu'ingrédient dans la pâtisserie, dans la salaisonnerie, dans la fabrication de plats cuisinés ou de crèmes glacées.

## Revendications

1. Ovoproduit liquide, constitué d'oeuf entier, exempt de liant gélatineux et amylacé et additionné de 2 à 10 grammes d'agent dit épaississant par kg, caractérisé en ce que
a) ou bien il est exempt d'huile et est additionné d'au moins 5 grammes d'eau par gramme d'agent dit épaississant,
b) ou bien il contient de l'huile en un poids représentant de 0,5 à 3 fois celui de l'agent épaississant.

2. Ovoproduit suivant la revendication 1, caractérisé en ce que l'agent dit épaississant est un alginate, de la gomme de xanthane ou un extrait de graines de guar ou de caroube.

3. Ovoproduit suivant l'une des revendications 1 ou 2, caractérisé en ce qu'il comprend au moins 2 grammes d'huile comestible, notamment végétale, ou au moins 5 grammes d'eau par gramme d'agent dit épaississant.

4. Ovoproduit suivant l'une des revendications 1 à 3, caractérisé en ce qu'il a une teneur pondérale en eau comprise entre 78,5 % et 83,5 %.

5. Ovoproduit suivant l'une des revendications 1 à 4, caractérisé en ce qu'il est contenu dans un récipient étanche aux microorganismes.

## Claims

1. Liquid egg product, consisting of whole egg free from gelatinous and amylaceous binder and containing 2 to 10 grams of so-called thickening agent added thereto per kg, characterised in that
a) either it is free from oil and at least 5 grams of water are added thereto per gram of so-called thickening agent,
b) or it contains oil in an amount by weight representing 0.5 to 3 times the amount of the thickening agent.

2. Egg product according to claim 1, characterised in that the so-called thickening agent is an alginate, xanthan gum or an extract of guar or carob beans.

3. Egg product according to one of claims 1 and 2, characterised in that it comprises at least 2 grams of edible oil, especially vegetable oil, or at least 5 grams of water per gram of so-called thickening agent.

4. Egg product according to one of claims 1 to 3, characterised in that it has a water content by weight of between 78.5% and 83.5%.

5. Egg product according to one of claims 1 to 4, characterised in that it is contained in a container which is sealed tight against microorganisms.

## Patentansprüche

1. Flüssiges Eiprodukt,
bestehend aus dem ganzen EI, ohne gelatinöses und stärkeartiges Bindemittel, jedoch mit einem Zusatz von 2 bis 10 Gramm eines sogenannten Verdickungsmittels pro 1kg Eiprodukt,
dadurch gekennzeichnet, dass
a) das Eiprodukt entweder kein Öl und zusätzlich wenigstens 5 Gramm Wasser pro 1 Gramm des sogenannten Verdickungsmittels enthält; oder
b) das Eiprodukt pro 1 Gewichtsanteil Verdickungsmittel 0,5 bis 3 Gewichtsanteile Öl enthält.

2. Eiprodukt nach Anspruch 1,
dadurch gekennzeichnet, dass
das sogenannte Verdickungsmittel ein Alginat, ein Xanthengummi oder ein Extrakt aus Samen von Guar (Kleegewächs) oder von Johannisbrot ist.

3. Eiprodukt nach Anspruch 1 oder 2,
dadurch gekennzeichnet, dass
das Eiprodukt pro 1 Gramm des sogenannten Verdickungsmittels wenigstens 2 Gramm Speiseöl, insbesondere Pflanzenöl, oder wenigstens 5 Gramm Wasser enthält.

4. Eiprodukt nach einem der Ansprüche 1 bis 3,
dadurch gekennzeichnet, dass
das Eiprodukt 78,5 bis 83,5 Gew.-% Wasser enthält.

5. Eiprodukt nach einem der Ansprüche 1 bis 4,
dadurch gekennzeichnet, dass
sich das Eiprodukt in einem Behälter befindet, der gegenüber Mikroorganismen dicht ist.
